# EUROPEAN PATENT APPLICATION

(11) **EP 1 309 065 A2**
(43) Date of publication of application: **07.05.2003**
(21) Application number: 02380229.1
(22) Date of filing: 05.11.2002
(51) Int. Cl.: H02J 7/35

(54) **Autonomous solar charger for mobile phone batteries**

(30) Priority: 05.11.2001 ES 200102682 U
(71) Applicant: Diaz Blanco, German, 45910 Escalona, Toledo (ES)
(72) Inventor: Diaz Blanco, German, 45910 Escalona, Toledo (ES)
(74) Representative: Maldonado Jordan, Julia

(57) **Abstract**

The charger incorporates an energy storage battery (1) on the cases of which are attached a series of solar panels (2) with the particularity of that the battery (1), by means of a conector (3), is connectable to the general electric supply or to the conector of an automobile vehicle lighter, in order to charge the battery in absence of solar light. A second connector (4) relates the battery (1) with the mobil phone for recharging the battery of the same at the expense of the cited battery (1). The optical signals (5), with different chromatism, indicate the conditions of charged battery, discharged battery and charging-in-progress battery.

## Description

### OBJECT OF THE INVENTION

The present invention refers to a charger that is specially intended for mobile phone batteries, this charger being autonomous due to the fact that it uses solar energy as charging power.

The charger is basically constituted by an electrical storage battery, to which solar plates, that transform the solar energy into electrical energy are attached and appropriately connected, stored in said battery, and which are transferred to the mobile phone by means of a connector with appropriate characteristics. Additionally being provided with another connector that eventually permits the battery to be charged from the general electrical supply network, and also being provided with indicators so as to know said battery's charging state.

### BACKGROUND OF THE INVENTION

Chargers are known, that are conventionally connectable to the general electrical supply network and that on other occasions, or even in an alternative manner, permit their coupling to the base of an automobile lighter connector base for the periodic recharging of mobile phone batteries. So that, whilst in the first case, the alternating network voltage, of 220 V is used, in the second, the direct current and of 12 V of an automobile battery, is used. This type of chargers, though they satisfactorily comply with the function for which they have been planned, present, as main problem, the dependency on an electrical supply source to which they must be connected, specifically the general electrical supply network or an automobile battery, due to which its use is limited to locations where connections to the previously indicated energetic supplies are available.

### DESCRIPTION OF THE INVENTION

The solar charger proposed by the invention, solves the previously indicated problem in a totally satisfactory manner, constituting an autonomous solution that does not require its connection to an electrical supply network or to an automobile lighter connection base, that is to say, allowing the mobile phone battery to be charged in any location or under any circumstances without any requirement other than the presence of solar light, preventing the user from having no battery at those moments when it is most needed.

To achieve this, and more specifically, the structure of the autonomous and solar charger proposed by the invention is based on an energy storage battery, of any appropriate, conventional type, on the casing of which are attached and conventionally fixed, a series of solar panels, suitably connected to said battery, and that are permanently charging it, provided environmental solar light exists.

The charger additionally incorporates three optical indicators, preferably coloured green, orange and red, indicating the "battery charged", "battery charging in progress" and "battery discharged" conditions.

In compliance with another of the characteristics of the invention, the participation in the charger of an optional connector has also been provided, in order to be able to store energy in the same, apart from doing so by means of the previously indicated solar plates or panels, using conventional systems, from the electrical network or from an automobile lighter connection base.

Obviously, the charger will transmit the energy stored in its battery by means of the corresponding connector, to the mobile phone battery when its user requires it.

As alternative, it has also been provided, that instead of using a specific battery belonging to the charger, and with independence from that of the mobile phone, the actual battery of the mobile phone is used directly, in which case, the solar panels shall be established on the mobile phone cover, which shall include on its interior, a connector for the automatic connecting of the mobile phone when it is inserted in the corresponding cover.

In any case, a charger, that provides great autonomy and which solves any unexpected issue that might occur to the user is obtained, without being dependent on the general electrical supply network, or on his own automobile.

### DESCRIPTION OF THE DRAWINGS

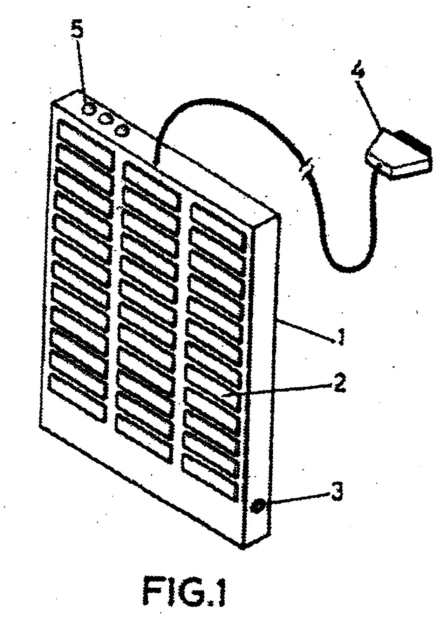

As complement to the description being made, with the purpose of aiding the better understanding of the characteristics of the invention according to a preferred exemplary practical embodiment of the same, one single figure is enclosed, forming integral part of said description, in which, schematically and in perspective, an autonomous, solar charger for mobile phone batteries according to the object of the present invention has been represented.

### PREFERRED EMBODIMENT OF THE INVENTION

In view of the mentioned figure, it can be observed how, in accordance with a preferred exemplary practical embodiment of the invention, the structure of the charger is made up as from an energy storage battery (1), on the casing of which are advantageously attached a plurality of solar plates (2), of appropriate characteristics, to ensure an appropriate charging capability to the battery (1).

However, the existence of a connector (3) has been provided, which permits the connection of the battery (1) to the general electrical supply network or to the connector of an automobile vehicle lighter, in order to charge said battery (1) during night-time or under very adverse conditions when solar rays may be insufficient for charging the same.

In turn, a connector (4) of appropriate characteristics shall be associated to the battery (1), in order to relate the battery (1) to the type of corresponding mobile phone (not represented in the drawing), in such a manner, that by means of this connector (4), the charge stored in the battery (1) is transmitted to the battery of the actual mobile phone.

Finally, in turn, three optical signals (5) are established on the battery (1) casing, with different chromatism, preferably one in green indicating the charged battery condition, an indicator in orange indicating that the battery is to be found in a charging -in-progress condition and an indicator in red, indicating that the battery is discharged.

Finally it only remains to say, that as has already being pointed out, the possibility exists of using the actual battery of the mobile phone instead of the electrical energy-storage battery (1), directly associating the solar panels (2) to the latter, in which case, said panels shall be established on the mobile phone-containing cover, and the connector (4) shall be replaced by a connector in the interior of said cover, with which the automatic connection between the solar panels (2) and the mobile phone battery is produced, when the latter is inserted inside its complementary cover.

## Claims

1. Autonomous solar charger for mobile phone batteries, **characterised in that** they are constituted as from an electrical storage battery (1), on the casing of which, a plurality of solar panels (2) are established, in such a manner, that the photovoltaic energy generated by said panels (2) and supplied to the battery (1), is transferable to the mobile phone battery by means of a connector (4), with characteristics appropriate to said mobile phone, and connectable to its electric outlet.

2. Autonomous solar charger for mobile phone batteries, according to Claim 1, **characterised in that** it includes a set of optical signals, preferably materialised into three pilot lamps with different chromatisms, indicating the charged battery, battery under-charging, and discharged battery conditions.

3. Autonomous solar charger for mobile phone batteries, according to the previous claims, **characterised in that** it additionally includes a second connector (3) that permits the charging of the battery (1) from the general electrical supply network or from the automobile lighter supply connector.

4. Autonomous solar charger for mobile phone batteries, according to the previous claims, **characterised in that** optionally, the solar panels (2) are directly connected to the battery of the actual mobile phone, in which case, said panels are established on the phone cover, said cover being provided with an interior connector for the automatic connection with the said mobile phone's battery with the simple operation of introducing the same in the corresponding cover.
